(19) **Europäisches Patentamt / European Patent Office / Office européen des brevets**

(11) **EP 4 738 757 A1**

(12) **EUROPEAN PATENT APPLICATION**

(43) Date of publication:
06.05.2026  Bulletin 2026/19

(51) International Patent Classification (IPC):
*H04L 5/16* (2006.01)   *H04L 47/28* (2022.01)

(21) Application number: 25209848.8

(52) Cooperative Patent Classification (CPC):
H04L 5/16; H04L 47/28

(22) Date of filing: 20.10.2025

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 31.10.2024  US 202418933616

(71) Applicant: NXP USA, Inc.
Austin, TX 78735 (US)

(72) Inventors:
• **Zhang, Yuwei**
5656 AG Eindhoven (NL)
• **Tiruchi Natarajan, Krishnan**
5656 AG Eindhoven (NL)
• **Daniel, Steven**
5656 AG Eindhoven (NL)

(74) Representative: **Schmütz, Christian Klaus
Johannes
NXP Semiconductors Germany GmbH
Intellectual Property Group
Beiersdorfstr. 12
22529 Hamburg (DE)**

(54) **IMPROVED HALF DUPLEX COMMUNICATION SYSTEM AND METHOD**

(57)    Improved half-duplex communication systems and methods are disclosed herein. In an example embodiment, an improved half-duplex communication system includes a first communication portion configured to operate at a first time as a first transmitter portion, and to receive a plurality of first data stream signals provided by a plurality of first ports, and also a second communication portion configured to operate at the first time as a first receiver portion, and configured to send a plurality of second data stream signals to be received by a plurality of second ports. The first communication portion includes each of a first data aggregation block, a first framing block, and a first modem device, and the second communications portion includes each of a first data deaggregation block, a first deframing block, and a second modem device.

FIG. 1

EP 4 738 757 A1

## Description

### FIELD OF THE DISCLOSURE

The present disclosure relates to communication systems and methods and, more particularly to half duplex communication systems and methods.

### BACKGROUND OF THE DISCLOSURE

Half duplex burst mode communication techniques are widely used in many conventional applications, such as wireless Bluetooth systems, Wi-Fi systems, and wired USB2 (Universal Serial Bus 2.0) systems.

### SUMMARY

According to an example embodiment, a half-duplex communication system comprising: a first communication portion configured to operate at a first time as a first transmitter portion, and to receive a plurality of first data stream signals provided by a plurality of first ports, wherein the first communication portion includes each of a first data aggregation block, a first framing block, and a first modem device, wherein the first data aggregation block is configured to aggregate the first data stream signals into a first combination data stream signal, wherein the first framing block is configured to package the first combination data stream signal into a first packaged data stream signal having a plurality of first frames, and wherein the first modem device is configured to communicate a first output signal based upon the first packaged data stream signal; and a second communication portion configured to operate at the first time as a first receiver portion, and configured to send a plurality of second data stream signals to be received by a plurality of second ports, wherein the second communication portion includes each of a first data deaggregation block, a first deframing block, and a second modem device, wherein the second modem device is configured to receive the first output signal and to provide a second packaged data stream signal based upon the output signal, wherein the first deframing block is configured to unpackage the second packaged data stream signal into a second combination data stream signal, and wherein the first data deaggregation block is configured to generate a plurality of second data stream signals based upon the second combination data stream signal.

In another example embodiment, wherein the first communication portion is configured to operate during at second time as a second receiver portion and the second communication is configured to operate at the second time as a second transmitter portion.

In another example embodiment, wherein the first modem device and second modem device are coupled by way of at least one wireless connection.

In another example embodiment, wherein the first modem device or the first communication portion includes a first antenna, wherein the second modem device or the second communication portion includes a second antenna, and wherein the first communication signals and second communication signals are communicated wirelessly between the first antenna and the second antenna.

In another example embodiment, wherein the first modem device and second modem device are coupled by way of at least one wired connection.

In another example embodiment, wherein the first communication portion includes at least one first processing device that is configured to provide the aggregation block by performing first operations in accordance with an application layer and second operations in accordance a link layer, and that is additionally configured to provide the framing block by performing second operations in accordance with a physical layer.

In another example embodiment, wherein the first operations performed by the at least one first processing device include scheduler polling operations.

In another example embodiment, wherein the second operations in accordance with the physical layer includes assembling a packet including at least some data received by each of the plurality of first data stream signals provided by each of the plurality of first ports.

In another example embodiment, wherein the first communication portion is a first transceiver portion in which the first modem device can both transmit first communication signals including the first output signal and also receive second communication signals, and wherein the second communication portion is a second transceiver portion in which the second modem device can both receive the first communication signals including the first output signal and also transmit the second communication signals.

In another example embodiment, wherein the first communication portion and the second communication portion are configured to operate so that, during a first time slot beginning at the first time, a first communication of a first frame occurs between the first communication portion and second communication portion, wherein the first communication of the first frame includes both a first transmission of the first output signal as a first downstream packet from the first communication portion to the second communication portion and also a second transmission of a second output signal as a first upstream packet from the second communication portion to the first communication portion, the second transmission occurring substantially immediately after the first transmission.

In another example embodiment, wherein each of the first downstream packet and the upstream packet includes a respective payload, a respective header slotted prior to the respective payload, a respective SYNC field slotted prior to the respective header, and a respective preamble field slotted prior to the respective SYNC field.

In another example embodiment, wherein the first communication portion is configured to send a plurality of heartbeat signals to the second communication portion on a periodic basis, wherein the plurality of heartbeat signals includes a first one of the heartbeat signals and a plurality of additional ones of the heartbeat signals, and wherein the first communication of the first frame occurs substantially immediately after a first completing of a first one of the heartbeat signals.

In another example embodiment, wherein the first communication portion and second communication portion are further configured to operate so that, during additional time slots, respectively, respective additional communications of respective additional frames occur between the first communication portion and the second communication portion, wherein each of the additional communications of each of the additional frames includes a respective first additional transmission of a respective additional downstream packet and a respective second additional transmission of a respective additional upstream packet, the respective second additional transmission occurring substantially immediately after the respective first additional transmission.

In another example embodiment, wherein the first communication portion and the second communication portion are further configured to operate so that each of the additional communications of the respective additional frames occurs substantially immediately after (a) a respective additional one of the heartbeat signals, (b) the first frame if the first frame is has a first flag set status, or (c) a respective different one of the additional frames if the respective different one of the additional frames has the first flag set status, and wherein additionally the first communication portion and the second communication portion operate in accordance with a virtual slot at an additional time.

In another example embodiment, wherein the first communication portion and the second communication portion are configured to cease communicating during an idle time interval, until a next one of the additional heartbeat signals has occurred, if it is determined that a most recently-communicated one of the first frame and the additional frames has a second flag set status.

In another example embodiment, wherein the first communication portion is a first transceiver portion in which the first modem device can both transmit first communication signals including the first output signal and also receive second communication signals, and wherein the second communication portion is a second transceiver portion in which the second modem device can both receive the first communication signals including the first output signal and also transmit the second communication signals, wherein, when the first transceiver portion is operating as a leader relative to the second transceiver portion, the first communication signals include first downstream packets and the second communication signals include first upstream packets that respectively follow respective ones of the first downstream packets and, when the second transceiver portion is operating as the leader relative to the first transceiver portion, the second communication signals include second downstream packets and the first communication signals include second upstream packets that respectively follow respective ones of the second downstream packets.

According to an example embodiment, a method of operating a half-duplex communication system, the method comprising: providing a first communication portion with a first transceiver portion and a second communication portion with a second transceiver portions; generating a first heartbeat signal at the first communication portion during a first time slot; if a first determination is made during the first time slot that there is first information appropriate to be communicated between the first communication portion and the second communication portion, then communicating a first frame including a first downstream packet and a first upstream packet between the first transceiver portion and the second transceiver portion during a second time slot following the first heartbeat signal, wherein the first downstream packet is communicated from the first transceiver portion to the second transceiver portion and the first upstream packet is communicated from the second transceiver portion to the first transceiver portion, and wherein the first frame is of a first type; if a second determination is made during the second time slot that there is second information appropriate to be communicated between the first communication portion and the second communication portion, communicating a second frame including a second downstream packet and a second upstream packet between the first transceiver portion and the second transceiver portion during a third time slot following the second time slot, wherein the second downstream packet is communicated from the first transceiver portion to the second transceiver portion and the first upstream packet is communicated from the second transceiver portion to the first transceiver portion, wherein the second frame is of a second type; refraining from communicating an additional frame between a first conclusion of the third time slot and a fourth time slot at which a second heartbeat signal is generated if both of the first determination and the second determination are made; and generating the second heartbeat signal at the fourth time slot, wherein the first and second heartbeat signals are two of a plurality of heartbeat signals that are generated periodically.

In another example embodiment, wherein each of the first downstream packet, the second downstream packet, the first upstream packet, and the second upstream packet is a physical layer packet that includes a respective payload, a respective header slotted prior to the respective payload, a respective SYNC field slotted prior to the respective header, and a respective preamble field slotted prior to the respective SYNC field, wherein each of the first downstream packet and the second downstream packet is formed by a first framing block portion of the first communication portion, and wherein each of the first upstream packet and the second upstream packet is formed by a second framing block portion of the second communication portion.

In another example embodiment, wherein each of the first downstream packet and the second downstream packet includes a plurality data portions received respectively from a plurality of user data streams respectively via a plurality of ports, respectively, and wherein the first communication portion is a first leader during each of the first time slot, second time slot, third time slot, and fourth time slot, but the second communication portion is a second leader during a fifth time slot subsequent to the fourth time slot.

According to an example embodiment, a method of operating a half-duplex communication system, the method comprising: providing a first communication portion with a first transceiver portion and a second communication portion with a second transceiver portions; generating a plurality of heartbeat signals at the first communication portion; during a first time period, transmitting a plurality of first communication signals between the first communication portion and the second communication portion, wherein each of the first communication signals includes a respective first frame that includes both of a respective first downstream packet and a respective first upstream packet, and wherein the first communication portion has a leader role relative to the second communication portion such that the respective first downstream packets are transmitted from the first communication portion to the second communication portion, and the respective first upstream packets are transmitted from the second communication portion to the first communication portion; and during a second time period, transmitting a plurality of second communication signals between the first communication portion and the second communication portion, wherein each of the second communication signals includes a respective second frame that includes both of a respective second downstream packet and a respective second upstream packet, and wherein the second communication portion has a leader role relative to the first communication portion such that the respective second downstream packets are transmitted from the second communication portion to the first communication portion, and the respective second upstream packets are transmitted from the first communication portion to the second communication portion.

## BRIEF DESCRIPTION OF THE DRAWINGS

Specific examples have been chosen for purposes of illustration and description, and are shown in the accompanying drawings, forming a part of the specification.

FIG. 1 is an example embodiment of a block diagram showing schematically an improved communication system employing a half duplex communication technique;

FIG. 2 is an example embodiment of a block diagram illustrating schematically an aggregation and framing layer structure, including a physical layer packet format, as can be employed by the improved communication system of FIG. 1;

FIG. 3 is an example embodiment of a schematic illustration of the example communication of packets by the improved communication system of FIG. 1;

FIG. 4 is an example embodiment of a schematic illustration of example heartbeat signals as can be implemented by the improved communication system of FIG. 1;

FIG. 5 is an example embodiment of a schematic illustration of a link layer scheduler that is configured to receive multiple user data streams from multiple different ports, as can be implemented by the improved communication system of FIG. 1;

FIG. 6 is an example embodiment of a schematic illustration of an example manner of operation of the improved communication system of FIG. 1 in accordance with a minimum power consumption (or power consumption priority) strategy; and

FIG. 7 is an example embodiment of a flow chart showing an example method of operation relating to leader switching, as can be performed by the improved communication system of FIG. 1.

While various embodiments discussed herein are amenable to modifications and alternative forms, aspects thereof have been shown by way of example in the drawings and are described in detail herein. It should be understood, however, that the disclosure is not limited to the particular embodiments described, and instead is meant to include all modifications, equivalents, and alternatives falling within the scope of the disclosure. In addition, the terms "example" and "embodiment" as used throughout this application is only by way of illustration, and not limitation, the Figures are not necessarily drawn to scale, and the use of the same reference symbols in different drawings indicates similar or identical items unless otherwise noted.

**DETAILED DESCRIPTION**

The present disclosure relates to improved half duplex communication systems, such as improved half duplex burst modem systems, which can operate with comparatively lower power requirements than full duplex systems. Conventional half duplex burst mode communication techniques are typically limited to one-point to multi-point systems, in which the leader device of the respective system is determined by the system topology structure, and typically only one type of user data is contained in one data burst packet. For at least one or more of these reasons, or one or more other reasons, the present disclosure envisions new or improved communications systems and associated methods involving half duplex burst mode communication techniques that address any one or more of such concerns associated with conventional systems and/or address one or more other concerns or provide one or more benefits.

In at least some example embodiments encompassed herein, the improved half duplex burst modem systems are ultra-low latency aggregation half duplex systems. Also, in at least some embodiments encompassed herein, the improved half duplex burst modem systems not only achieve low power consumption (e.g., by staying idle when there is no data to send) but also operate as multi-port concurrent aggregation systems. Indeed, in at least some such embodiments encompassed herein, such an improved half duplex burst modem system is a low latency, high bandwidth system that enables multiple data sources to be aggregated into a single data stream and communicated across one link, and thus operates as a multiple data source point-to-point half duplex system.

Additionally, in at least some embodiments encompassed herein, an improved half duplex burst modem system employs a multi-port fine-grain aggregation and framing system and corresponding link management protocol. Such an improved half duplex burst modem system operates to perform aggregation of various user data streams from multiple ports and utilizes the associated link management protocol to optimize the communication of the data from those user data streams across a single link at high speed and low power. Further, such an improved half duplex burst modem system can be referred to as a multi-port aggregation and framing half duplex burst modem system, and is (or can be) configured to optimize system power consumption and latency performance.

Further, the present disclosure includes (but is not limited to) embodiments in which such improved half duplex burst modem systems employ any of three different scheduling strategies, namely: (1) a power consumption priority (minimum power consumption) strategy; (2) a latency priority strategy; and/or (3) an ultra-low latency strategy. In at least some embodiments, power consumption is enhanced through the implementation of a "more frame flag," which allows the system to go to an idle status (in which no signals are transmitted) when there is no data to send. Also, in at least some embodiments, a "virtual slot" can be employed for buffer control, and for maintaining latency to meet requirements.

Also, in at least some example embodiments encompassed herein, an improved half duplex burst modem system employs an aggregation and framing system in which aggregation and framing is organized into three layers, namely: (1) an application layer that receives data from each user port; (2) a link layer that is controlled by a scheduler, which is polling the application layer in a weighted round robin manner to aggregate multiple user data streams into one stream; and (3) a physical (PHY) layer that frames the data stream into a packet. Further, in at least some embodiments, three type scheduling strategies are elaborated to handle different application requirements, namely: (1) one PHY layer packet contains data from multiple user ports; (2) leader switching; and (3) idle time interval between frames.

Further, in at least some example embodiments, the present disclosure relates to an improved half duplex burst modem system that particularly is a point-to-point half duplex burst modem system that concurrently combines disparate elements from multiple data sources into a single aggregated data frame. That is, a single data frame contains data arriving from multiple user ports. In addition, in at least some embodiments, the leader role in the improved half duplex burst modem system can be picked by the side that can help achieve lower system power consumption and/or lower latency. Such operation is advantageous by comparison with many conventional systems, in which each packet only contains data from one data source.

For example, in at least some example embodiments encompassed herein, an improved half duplex burst modem system employs a particular link layer segment structure (e.g., { portID + certain length data } { portID + certain length data }) that allows for the packing of data from multiple sources (multiple source data) into one data package. Such a segment structure can support leader role switching, and can enable the achieving of ultra-low latency operation. Further, notwithstanding that the present disclosure encompasses embodiments having low or ultra-low latency operation, it should additionally be appreciated that in other embodiments also encompassed herein, when latency requirement is not very tight, no leader role switching occurs.

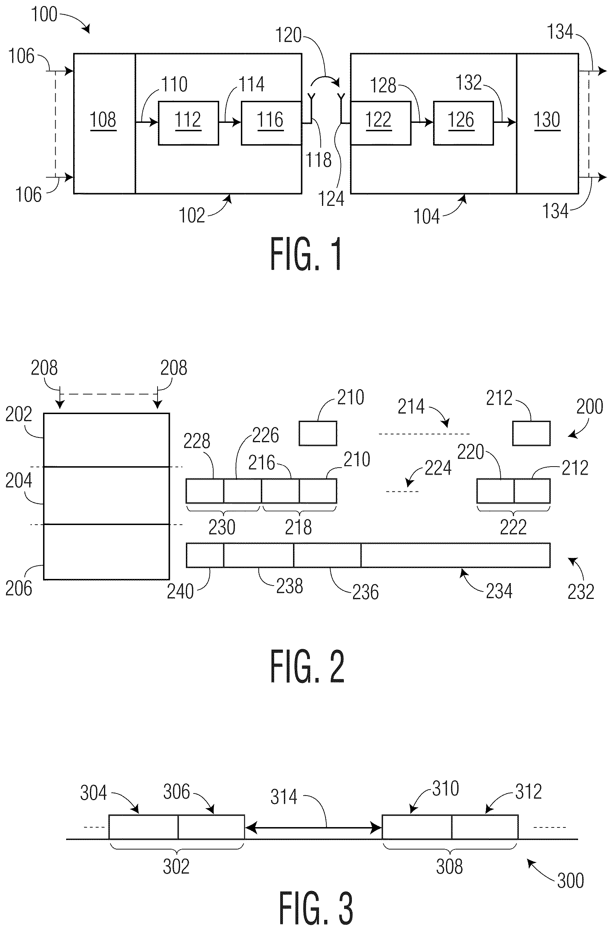

Referring to FIG. 1, a block diagram is provided to illustrate schematically a system architecture for an improved half duplex burst modem system 100 in accordance with an example embodiment encompassed herein. In the present example embodiment, the improved half duplex burst modem system 100 is a low latency, high bandwidth system that enables multiple data sources to be aggregated into a single data stream and communicated across one link, and thus operates as a multiple data source point-to-point half duplex burst modem system. As illustrated, the improved half duplex burst modem system 100 includes both a first transceiver portion (or side or end) that is shown to be operating as a transmitter portion 102, and also a second transceiver portion (or side or end) that is shown to be operating as a receiver portion (or side or end) 104.

More particularly, with respect to the transmitter portion 102, as represented by first arrows 106 directed to a data aggregation block 108, the improved half duplex burst modem system 100 receives multiple user data stream signals, respectively, which come in from multiple different ports, respectively (e.g., as can be associated with or operated by or in response to multiple different users, respectively). Such multiple different ports from which the multiple user data stream signals are received can include, for example, any one or more of a universal asynchronous receiver-transmitter (UART) port, an inter-integrated circuit (I2C) port, a serial wire debug (SWD) port, and/or a universal serial bus 2.0 (USB2) port. Upon receiving such multiple user data stream signals, the improved half duplex burst modem system 100 at the data aggregation block 108 then aggregates those multiple user data stream signals into a single combination data stream signal as represented by a second arrow 110. Next, as represented by a framing block 112, the single combination data stream signal is packaged into a plurality of frames so as to form a packaged data stream signal having the plurality of frames. Further, as represented by a third arrow 114, the packaged data stream signal with the packaged frames is provided to a half duplex modem transmitter 116. The half duplex modem transmitter 116 in turn transmits that packaged data stream (with the plurality of frames), or a signal based thereupon, from a first antenna 118 of the half duplex modem transmitter, as a communicated signal represented by a fourth arrow 120.

Additionally, with respect to the receiver portion 104, the improved half duplex burst modem system 100 includes a half duplex modem receiver 122 that includes a second antenna 124, which receives the communicated signal (again as represented by the fourth arrow 120). Further, the receiver portion 104 includes a deframing block 126. Upon receiving the communicated signal at the half duplex modem receiver 122, the half duplex modem receiver in turn provides to the deframing block 124, based upon the communicated signal, a packaged data stream signal with a plurality of frames, as represented by a fifth arrow 128. At the deframing block 126, the frames of the packaged data stream signal received by the deframing block are unpackaged in a manner that is the inverse of (or substantially or largely the inverse of) the packaging operation performed by the framing block 112. Upon the completion of the unpackaging of the packaged data stream signal, a single (unpackaged) combination data stream signal based upon the packaged data stream signal is further provided from the deframing block 126 to a data deaggregation (or disaggregation) block 130, as represented by a sixth arrow 132.

At the data deaggregation block 130, the single (unpackaged) combination data stream is deaggregated (or disaggregated) into multiple user data stream signals in a manner that is the inverse (or substantially or largely the inverse) of the aggregation operation performed by the data aggregation block 108. Upon such deaggregation (or disaggregation) being completed by the data deaggregation block 130, the receiver portion 104 of the improved half duplex burst modem system 100 then outputs (or distributes) the multiple user data stream signals provided by the data deaggregation block 130, respectively, to multiple different ports, respectively (e.g., as can be associated with or operated by or in response to multiple different users, respectively), as represented by seventh arrows 134. The output of the multiple user data stream signals as represented by the seventh arrows 134 can be directed to any one or more of a variety of different types of ports including, for example, any one or more of a universal asynchronous receiver-transmitter (UART) port, an inter-integrated circuit (I2C) port, a serial wire debug (SWD) port, and/or a universal serial bus 2.0 (USB2) port.

It should be appreciated that the multiple user data stream signals received by the data aggregation block 108 of the transmitter portion 102 can be considered different signals than the multiple user data stream signals output by the data deaggregation block 130 of the receiver portion 104. Likewise, the single (unpackaged) combination data stream signal provided from the deframing block 126 can be considered a different signal than the single combination data stream signal received by the framing block 112, and the packaged data stream signal provided from the second modem device 122 to the deframing block 126 can be considered a different signal than the packaged data stream signal provided from the framing block 112 to the first modem device 116.

Nevertheless, in at least some embodiments or operational circumstances, operation of the improved half duplex burst modem system 100 can be such that packaged data stream signal provided from the second modem device 122 to the deframing block 126 is identical or substantially similar to (albeit possibly time delayed relative to) the packaged data stream signal provided from the framing block 112 to the modem device 116. Also, in at least some embodiments or operational circumstances, operation of the improved half duplex burst modem system 100 can be such that the single (unpackaged) combination data stream signal provided from the deframing block 126 is identical or substantially similar to (albeit possibly time delayed relative to) the single combination data stream signal provided to the framing block 112. Further, in at least some embodiments or operational circumstances, operation of the improved half duplex burst modem system 100 can be such that the multiple user data stream signals output by the data deaggregation block 130 are respectively identical or substantially similar to (albeit possibly time delayed relative to) the multiple user data stream signals received by the data aggregation block 108, respectively.

It should be appreciated that the improved half duplex burst modem system 100 is intended to be representative of a variety of embodiments of improved half duplex burst modem systems that are encompassed herein. For example, the modem provided by the improved half duplex burst modem system 100, including the half duplex modem transmitter 116 and the half duplex modem receiver 122, can be either a wired or wireless modem. Correspondingly, the first antenna 118 and the second antenna 124 are respectively intended to be figurative illustrations of an output port (or terminal) of the half duplex modem transmitter 116 and an input port (or terminal) of the half duplex modem receiver 122, respectively, which depending upon the embodiment can allow for the communication therebetween of either wired or wireless signals as represented by the fourth arrow 120. That is, to the extent that the half duplex modem transmitter 116 and the half duplex modem receiver 122 communicate signals therebetween in a wired manner, the fourth arrow 120 can be representative of such signals being communicated via one or more wired connections and, to the extent that the half duplex modem transmitter 116 and the half duplex modem receiver 122 communicate signals therebetween in a wireless manner, the fourth arrow 120 can be representative of such signals being communicated wirelessly (at least partly) therebetween.

It should be recognized that the present embodiment of the improved half duplex burst modem system 100 (given that it is a half duplex system) operates to allow communications in both directions between the transmitter portion 102 and the receiver portion 104. FIG. 1 describes the transmitter portion 102 as a "transmitter portion" and the receiver portion 104 as a "receiver portion" in that, during a first time as illustrated, operation occurs in which multiple user data stream signals received by the transmitter portion 102 are aggregated, packaged, and communicated to the receiver portion 104, at which the communicated signals in turn are unpackaged, deaggregated, and output as multiple user data stream signals. However, it should be appreciated that, in the improved half duplex burst modem system 100, signal flow can also proceed in the opposite direction. That is, in the improved half duplex burst modem system 100, multiple user data streams are communicated not only from the transmitter portion (or side or end) 102 to the receiver portion (or side or end) 104, but also in the opposite direction from the receiver portion 104 to the transmitter portion 102.

More particularly, even though FIG. 1 shows the improved half duplex burst modem system as having the transmitter portion 102 and the receiver portion 104, as already mentioned above, each of the transmitter portion 102 and the receiver portion 104 nevertheless should be considered a respective transceiver portion such that signals can be communicated between those two portions in either direction. Correspondingly, even though FIG. 1 shows the transmitter portion 102 as including the half duplex modem transmitter 116 and the receiver portion 104 as including the half duplex modem receiver 122, each of the half duplex modem transmitter 116 and the half duplex modem receiver 122 should be understood to constitute a respective transceiver capable of both sending and receiving signals. Also, even though FIG. 1 shows the transmitter portion 102 as including framing block 112 and the receiver portion 104 as including the deframing block 126, each of the framing block and the deframing block should be understood as representing a block at which both packaging and unpackaging of frames can occur depending upon whether the transceiver portion corresponding to the transmitter portion 102 is operating to transmit or receive and whether the transceiver portion corresponding to the receiver portion 104 is operating to receive or transmit. Additionally, even though FIG. 1 shows the transmitter portion 102 as including the data aggregation block 108 and the receiver portion 104 as including the data deaggregation block 130, each of the data aggregation block and the data deaggregation block should be understood as representing a block at which both data aggregation (or combining) and data deaggregation can occur depending upon whether the transmitter portion is operating to transmit or receive and whether the receiver portion is operating to receive or transmit.

Thus, when the transceiver portion corresponding to the receiver portion 104 is operating as a transmitter portion (with the transceiver corresponding to the half duplex modem receiver 122 operating to transmit signals) and the transceiver portion corresponding to the transmitter portion 102 is operating as a receiver portion (with the transceiver corresponding to the half duplex modem transmitter 116 operating to receive signals), the other functions of the receiver portion and the transmitter portion are also reversed relative to what is shown in FIG. 1. That is, in such circumstance, the data aggregation block 108 can operate as a data deaggregation block, the framing block 112 can operate as a deframing block, the data deaggregation block 130 can operate as a data aggregation block, and the deframing block 126 can operate as a framing block.

Further with respect to the improved half duplex burst modem system 100, each of the transmitter portion 102 (or first transceiver portion) and the receiver portion 104 (or second transceiver portion) can be understood to be representative of (or to include) any of a variety of processing device(s) or processor(s) as well as any of a variety of memory device(s). For example, in at least some embodiments, each of the transmitter portion 102 and the receiver portion 104 can include a respective system-on-a-chip (SoC) having a respective microprocessor and associated memory and that operates in conjunction with (or includes) the first antenna 118 and second antenna 124, respectively. In some such embodiments, the respective SoCs of each of the transmitter portion 102 and the receiver portion 104 can be programmed to operate in accordance with software or firmware so as to serve as each of the framing block 112, the deframing block 126, the data aggregation block 108, and the data deaggregation block 130.

In further example embodiments, the transmitter portion (or first transceiver portion) 102 and the receiver portion (or second transceiver portion) 104 can employ any of a variety of other types of processing device(s) including, further for example, programmable logic devices (PLDs) or application specific integrated circuits (ASICs), and/or any of a variety of types of memory device(s) such as, further for example, random access memory (RAM) devices, read only memory (ROM) devices (and forms thereof, including electrically erasable programmable read only memory (EEPROM) devices). Also for example, in some embodiments, the transmitter portion (or first transceiver portion) 102 or the receiver portion (or second transceiver portion) 104 can employ a device that has both processing and memory capabilities (e.g., a processor-in-memory or PIM).

Turning to FIG. 2, a schematic diagram 200 is provided to illustrate aggregation operation and framing operation (or the principles of aggregation and framing operation), as can respectively be performed by the data aggregation block 108 and the framing block 112, respectively. As illustrated, aggregation and framing can be divided into three layers of operation, namely, an application layer 202, a link layer 204, and a physical (PHY) layer 206. It is the application layer 202 that receives the multiple user data streams from the multiple different ports, as represented by arrows 208. In this regard, it should be appreciated that the receipt of multiple user data streams as represented by the arrows 208 corresponds to the receipt of multiple user data streams as represented by the first arrows 106. FIG. 2 particularly illustrates how up to n different user data streams respectively carrying up to n different payloads can be received from up to n different ports, as represented by a port payload 1 box 210, port payload n box 212, and an ellipsis 214 between the port payload 1 box and the port payload n box. In at least some example implementations, the application layer 202 includes one high bit rate (HBR) and n low bit rate (LBR) user ports.

Upon receiving the multiple user data streams from the multiple user ports, the application layer 202 then serves to notify the link layer 204 about data availability. Each of the different user ports can be assigned a weight factor depending on priority levels and other performance metrics. Further, the data or payloads arriving via the multiple user data streams is coded at the link layer 204, with such coding for example being performed at the data aggregation block 108 in FIG. 1. Indeed, in the present embodiment, a port identification code ("portID") is assigned to each port, and then the data is pushed into link layer buffer with the following format: { portID + certain length data } { portID + certain length data } ......

FIG. 2 particularly illustrates how up to n different payloads can be added to the link layer 204, with each of the n different payloads being assigned a respective port ID. That is, FIG. 2 particularly shows how, upon receiving n different payloads ranging from 1 to n, a port identification code 216 for the payload 1 is assigned to and slotted in just prior to the port payload 1 box 210, so as to form a payload 1 grouping 218, and additionally a port identification code 220 for the payload n is assigned to and slotted in just prior to the port payload n box 212 to form a payload n grouping 222. An ellipsis 224 is also provided to indicate that other payload groupings for other payloads, with each including a respective port identification code for each other payload, can also be provided to the link layer buffer.

In the present example embodiment, the link layer 204 also is provided with a zeroth ($0^{th}$) or "virtual" port payload box 226, and a port identification ("port 0") code 228 is assigned to and slotted just prior to that port payload box so as to form a port 0 payload grouping 230 (with the port 0 payload grouping 230 being also slotted just prior to the payload 1 grouping 218). In this case, the port 0 payload grouping 230 represents a virtual port for link management data. This format can be decoded at deaggregator side (e.g., by the data deaggregation block 130) of the improved half duplex burst modem system 100. Also, in at least some example implementations, the link layer operates to aggregate HR port with a LBR port data to form a subframe, and a descriptor is added to indicate that LBR comes from which user port-in the above example, port 0 represents a virtual port for link management data (e.g., house-keeping).

Further with respect to FIG. 2, in addition to the coding added during the progression from the application layer 202 to the link layer 204, in the present example further coding is performed during the progression from the link layer 204 to the PHY layer 206. More particularly as shown, in the present example embodiment, at the PHY layer 206 there is framing of the multiple user data streams so that each of the payloads (such as the port payload 1 box 210 through the port payload n box 212 mentioned above) is modified to take the form of a packet 232. In each of the packets taking the form of the packet 232, there is, in addition to a respective payload 234, also (i) a respective header 236 assigned to and slotted just prior to the respective payload, (ii) a respective SYNC field 238 assigned to and slotted just prior to the respective header, and (iii) a respective preamble field 240 assigned to and slotted just prior to the respective SYNC field. The respective preamble field 240 particularly allows for the half duplex modem receiver 122 to finish its Automatic Gain Control (AGC) operation. The respective SYNC field 238 particularly allows for detecting the starting point of the data of the respective payload 234. Further, the respective header 236 contains control and status information to be utilized for the PHY layer 206 control. Additionally, the respective payload 234 carries the data stream from the link layer 204.

It should be appreciated that, in terms of correspondences between the application layer 202 and the link layer 204 shown in FIG. 2 relative to the improved half duplex burst modem system 100 of FIG. 1, the operations of both of the application layer 202 and the link layer 204 can be understood to be performed by the data aggregation block 108. Also, it should be recognized that the operations performed by the data deaggregation block 130 can also include operations that are respectively the inverses of those ascribed to the application layer 202 and the link layer 204 as described above with respect to FIG. 2. Further, in terms of a correspondence between the operations associated with the PHY layer 206 and the improved half duplex burst modem system 100, it should be appreciated that the operations associated with the PHY layer 206 particularly can be performed by the framing block 112. Also, it should be recognized that the operations performed by the deframing block 126 can also include operations that are respectively the inverse of those ascribed to the PHY layer 206 as described above with respect to FIG. 2.

Additionally, in the present example embodiment, communication of signals by the improved half duplex burst modem system 100 occurs at or during particular time slots. Referring to FIG. 3, a schematic diagram 300 figuratively illustrates the communication of packets both downstream and upstream. As already described above with respect to the improved half duplex burst modem system 100 of FIG. 1, in at least some embodiments encompassed herein, signals can be communicated by the improved half duplex burst modem system both from the transmitter portion 102 to the receiver portion 104 and also from the receiver portion 104 to the transmitter portion 102 (with each of those portions constituting a respective transceiver portion including a respective transceiver). FIG. 3 particularly illustrates example operation of a paired two-ends system. In such a system, one side or end (e.g., the transmitter portion 102 or, alternatively, the receiver portion 104) operates as the leader and the other side or end (e.g., the receiver portion or, alternatively, the transmitter portion) operates as the follower.

Further, in a paired two-ends system, the leader controls system timing-that is, the leader sends a downstream packet, and then the follower sends in response an upstream packet. Each of the downstream packet and the upstream packet can have the form of the packet 232 described with respect to FIG. 2, and a paired combination of a downstream packet and an upstream packet is referred to as a time slot or frame. In this regard, the schematic diagram 300 particularly shows a succession of a first frame 302 having a first downstream packet 304 followed by a first upstream packet 306 and a second frame 308 having a second downstream packet 310 followed by a second upstream packet 312. Also, FIG. 3 shows that the second frame 308 begins after the end of the first frame 302 by a time differential 314. Although the schematic diagram 300 shows an example timing of a first frame followed by a second frame, in other circumstances, the second frame can occur sooner or later after the completion of the first frame. Also, although only the first frame 302 and the second frame 308 are shown in FIG. 3, it should be appreciated that the schematic diagram 300 is intended to represent any arbitrary number of one, two, or more (often many more) frames.

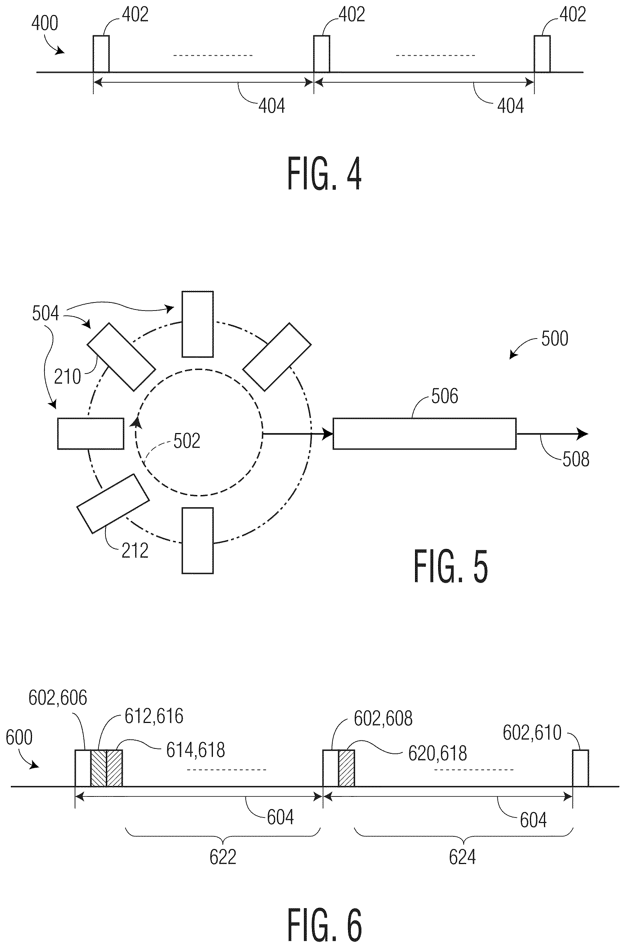

Additionally in the present example embodiment, communication of signals in the form of frames (or time slots) by the improved half duplex burst modem system 100 occurs in a periodic manner. That is, the improved half duplex burst modem system 100 operates to determine periodic time regions (which can be called periodical frames) during which frames having combinations of downstream packets and upstream packets can occur. More particularly in this regard, FIG. 4 provides a schematic diagram 400 of a sequence of periodic, successively-occurring heartbeat signals (which can also be referred to as heartbeat time slots or heartbeat pulses or, more simply, heartbeats) 402, in which each heartbeat begins upon the expiration of a respective heartbeat time interval 404 relative to (subsequent to) the beginning of a respective prior heartbeat. By determining in this manner (based upon the occurrences of the periodic heartbeats 402) the periodic time regions during which frames can occur, it is possible to maintain system synchronization.

Further in the present example embodiment, frame assignment is controlled by a link layer scheduler. In this regard, FIG. 5 shows a schematic representation 500 of a link layer scheduler. As illustrated by the schematic representation 500, the link layer scheduler operates by polling the application layer 202 in a weighted round robin manner to aggregate multiple user data streams into one stream. That is, as represented by a rotating dashed arrow 502, the link layer scheduler cycles through and considers multiple port payloads 504 such as, for example, the port payload 1 box 210 and the port payload n box 212, and aggregates those payloads from different user ports into the single data stream at a link layer buffer 506. The single data stream formed at the link layer buffer 506 is then provided to the PHY layer 206, as indicated by an arrow 508. Also in the present example embodiment, the link layer scheduler follows certain rules, namely: (1) the system shall be fixable on individual port plug/unplug event; (2) different user ports can be scheduled with different priority; (3) frames (or time slots) shall be guaranteed for the highest priority user port; (4) frames (or time slots) shall be guaranteed for synchronous type data; and (5) asynchronous data follows a "best effort" rule.

Depending upon the embodiment or implementation, the link layer scheduler can employ any of a variety of particular scheduling strategies. In particular, in at least some embodiments or implementations encompassed herein, three different types of scheduling strategies are considered, namely: (1) a first scheduling strategy, in which power consumption (particularly, lowering, limiting, or minimizing power consumption) is the highest priority or the only priority, which can be referred to as a power consumption priority (or minimum power consumption) strategy; (2) a second scheduling strategy in which latency is a highest priority or the only priority, which can be referred to as a latency priority strategy; and/or (3) a third scheduling strategy in which achieving ultra-low latency is the highest priority or the only priority, which can be referred to as an ultra-low latency priority strategy.

FIG. 6 provides a schematic illustration 600 of operation of the improved half duplex burst modem system 100 in accordance with an example embodiment of the first scheduling strategy, which again is a power consumption priority strategy (and which can also be considered a best power saving strategy). In this embodiment, operation in accordance with the power consumption priority strategy involves arranging the data-containing frames (or time slots) to be aligned with heartbeat slots and to push out data continually, and then to stop. By virtue of this manner of operation, the improved half duplex burst modem system 100 can have the longest time to keep in idle state, which can maximize the saving of system power.

More particularly as shown in FIG. 6, in accordance with this first scheduling strategy (power consumption priority strategy), as in the schematic diagram 400, operation involves a sequence of periodic heartbeats 602, in which each successive heartbeat begins upon the expiration of a respective heartbeat time interval 604 relative to (subsequent to) the beginning of a respective preceding heartbeat. When either side of the improved half duplex burst modem system 100 (e.g., either the first transceiver portion corresponding to the transmitter portion 102 operates as a transmitter, or the second transceiver portion corresponding to the receiver portion 104 operates as a transmitter) has data to send, the data frame shall align to a heartbeat timing base as shown in FIG. 6. It should be recognized that, as already discussed above with respect to FIG. 3, every frame includes a respective downstream packet or portion (e.g., corresponding to the first downstream packet 304) and a respective upstream packet or portion (e.g., corresponding to the first upstream packet 306). Further, the device at each side can notify its peer that it has more data to send in the next frame by setting a flag bit. Both sides can become idle when there is no more data to be sent.

Further as shown in FIG. 6, in the example schematic illustration 600 that is provided, a sequence of three of the heartbeats 602 is shown, namely, a first heartbeat 606, a second heartbeat 608, and a third heartbeat 610. FIG. 6 particularly illustrates different example communication sequences that can occur following the three different ones of the heartbeats 602 based upon the availability of information to be transmitted at or proximate to the times of those respective heartbeats. For example, in the example schematic illustration 600, the first heartbeat 608 is immediately followed by a first frame (or time slot) 612 and a second frame (or time slot) 614. The first frame 612 is a first type of frame in which, in addition to communicating first information, also the first frame sets a flag bit indicating that there is still currently available additional information to be sent in the future following the communication of the first frame. Such a first type of frame can be referred to as a "more frame flag set" frame 616 (and accordingly is shown with a first type of cross-hatching in FIG. 6) Additionally, because at the time of the first frame 612 there is currently available additional information to be sent, then in this example the first frame 612 is immediately followed by the second frame 614, in which the additional information is sent.

However, also in this example, the sending of the second frame 614 exhausts all of the information that is available to be sent at that time. Consequently, the second frame 614 is a second type of frame differing from the first frame 612, in that the second frame does not include a flag bit indicating that there is still additional information to be sent in the future. Such a second type of frame can be referred to as a "more frame flag not set" frame 618. Because there is no further information available to be sent upon the communication of the second frame 614, the second frame is the final transmission of information occurring subsequent to the first heartbeat 606 but prior to the second heartbeat 608. No additional frames, or associated information, can (or will) then be communicated subsequently until the occurrence of the second heartbeat 608. Thus, during a first intermediate time period 622 extending from the end of the second frame 614 and the beginning of the second heartbeat 608, the improved half duplex burst modem system 100 does not communicate any information between the transmitter portion 102 and the receiver portion 104.

By contrast, in the case of the second heartbeat 608, there is a third frame 620 that immediately follows the second heartbeat, during which first information is transmitted. Because there is no additional information to be sent following the first information, the third frame 620 also (as with the second frame 614) is one of the "more frame flag not set" frames 618 that does not set any flag bit indicating that there is still additional information to be sent.. Accordingly, the third fame 620 is the final frame representing the final transmission of information that occurs subsequent to the second heartbeat 608 and prior to the third heartbeat 610. Because there is no further information available to be sent upon the communication of the third frame 620, the third frame is the final transmission of information that occurs subsequent to the second heartbeat 608 but prior to the third heartbeat 610. No additional frames, or associated information, can then be communicated subsequently until the occurrence of the third heartbeat 610. Thus, during a second intermediate time period 624 extending from the end of the third frame 620 and the beginning of the third heartbeat 610, the improved half duplex burst modem system 100 does not communicate any information between the transmitter portion 102 and the receiver portion 104.

However, in the case of the third heartbeat 610, there is no additional frame that immediately follows that third heartbeat, because in this case there is no information available to be transmitted at the time of the third heartbeat. Because there is no further information available to be sent at the time of the third heartbeat 610, no additional frames, or associated information, are then be communicated subsequently until the occurrence of a subsequent heartbeat (which can occur following the third heartbeat 610, but is not shown in FIG. 6).

Accordingly, when the improved half duplex burst modem system 100 operates in accordance with the first scheduling strategy (power consumption priority strategy), particularly in the manner described above with respect to FIG. 6, both sides of the improved half duplex burst modem system are only active at, or immediately following, scheduled ones of the heartbeats 602 or previously-communicated frames of the "more frame flag set" type (such as the first frame 612). That is, neither the transmitter portion 102, nor the receiver portion 104, will transmit or receive (or hear) any information except at times immediately following the heartbeats 602 or frames of the "more frame flag set" type (such as the first frame 612), at which there is still currently available additional information to be sent. That is at other times, such as during the first intermediate time period 622 and during the second intermediate time period 624 as shown in FIG. 6, the transmitter portion 102 and the receiver portion 104 will not transmit or receive (or hear) anything. Such operation provides two benefits, namely, such operation serves to save power and also reduces the chance of interference from surrounding noise.

Further it should be appreciated that, in practice, the improved half duplex burst modem system 100 when implemented will have a designed (or designated) buffer size. Consequently, if the heartbeat time interval 604 (and, correspondingly, the heartbeat rate or frequency) is unchanged, when the user data rate increases, there is a possibility that either data will be lost because of possible buffer overflow, or that data will stop coming in due to a flow control protocol. To overcome or alleviate such concerns, in at least some embodiments encompassed herein, the improved half duplex burst modem system 100 also employs "virtual time slots" or "virtual slots". In this regard, a virtual slot is a scheduled time slot during which each of the sides (again, for example, each of the transmitter portion 102 and the receiver portion 104, with each having a transceiver) will send out whatever data the respective side(s) has (or have) that is to be sent and, if the respective side(s) has (or have) no data to send, then the respective side(s) will listen during this time slot to check if the other side sends data within this time slot. Thus, a virtual slot can serve as a listening time slot.

Although a virtual slot can be defined in any of a variety of manners depending upon the embodiment, in the present example embodiment, for a given total user data rate, it will be appropriate for the improved half duplex burst modem system 100 to open virtual slots with an interval defined in Equation (1):

$$virtual\_slot\_interval \leq \frac{BufferSize}{Data_{rate}} \qquad (1)$$

Also, it should be noted that, if the desired *virtual_slot_interval* is larger than heartbeat interval 604, no virtual slot is needed.

Notwithstanding the definition of the *virtual_slot_interval* provided in Equation (1), as mentioned above the link layer scheduler of the improved half duplex burst modem system 100 can in other embodiments employ the second scheduling strategy in which latency is a highest priority or the only priority (latency priority strategy). When user data has latency requirements, the improved half duplex burst modem system 100 still can have idle time to meet the latency requirement and, in this circumstance, the improved half duplex burst modem system can operate with virtual slots that are defined (or constrained) to have a *virtual_slot_interval* provided in accordance with Equation (2) as follows:

$$virtual\_slot\_interval \leq required\ latency \qquad (2)$$

It should be additionally recognized that the above-described manners of operation of the improved half duplex burst modem system 100 in accordance with the first strategy (power consumption priority strategy) and the second strategy (latency priority strategy) share in common several characteristics/points, namely: (a) with respect to each of these strategies, the leader and follower devices (e.g., the transmitter portion 102 and the receiver portion 104) have a fixed relationship; and (b) with respect to each of these strategies, the improved half duplex burst modem system has time to be idle. However, when the improved half duplex burst modem system 100 is configured to operate in accordance with the third scheduling strategy in which achieving ultra-low latency is the highest priority or the only priority (ultra-low latency priority strategy), the aforementioned two characteristics (a) and (b) will no longer be satisfied.

For example, suppose that the improved half duplex burst modem system 100 of FIG. 1 is a USB2 system having a latency requirement of lower than seventy-five (75) nanoseconds (ns), in which the host is the system leader which determines the data frame timing. Also, suppose that a given data frame always starts from the leader side (e.g., the leader starts the downstream packet, and the follower responds with an upstream packet), and the follower shall not send data to the leader without having received a downstream packet. Additionally, suppose that the transmitter portion 102 is considered to be the initial leader and initially serves as the USB2 data sending side. Further suppose that, even though the transmitter portion 102 constitutes the initial leader, at a later time operation of the improved half duplex burst modem system 100 then switches such that the direction of the USB2 data communication changes and the receiver portion 104 is then the leader (such operation helps to achieve the USB2 latency requirement).

Given the above-described assumptions, three kinds of operational scenarios can happen at the leader side. In a first operational scenario, the leader is in an idle state when the USB2 data arrives. In that case, the leader can start a frame to line up with the USB2 data so the latency at the transmitter side can be optimized. Alternatively, in a second operational scenario, the leader is already transmitting when USB2 data arrives. As discussed previously, in the present embodiment the data stream provided into link layer buffer is organized to have the following format: { portID + certain length data } { portID + certain length data } ...... Given such this format, USB2 data can be inserted immediately after a non-USB2 data segment. As long as the improved half duplex burst modem system 100 configures the data length under a certain number, USB2 data latency at the transmitter side can be kept under control. Further, in a third operational scenario, there is no USB2 data while the leader is transmitting. Accordingly, in this scenario, there is no USB2 latency caused by the leader transmitting.

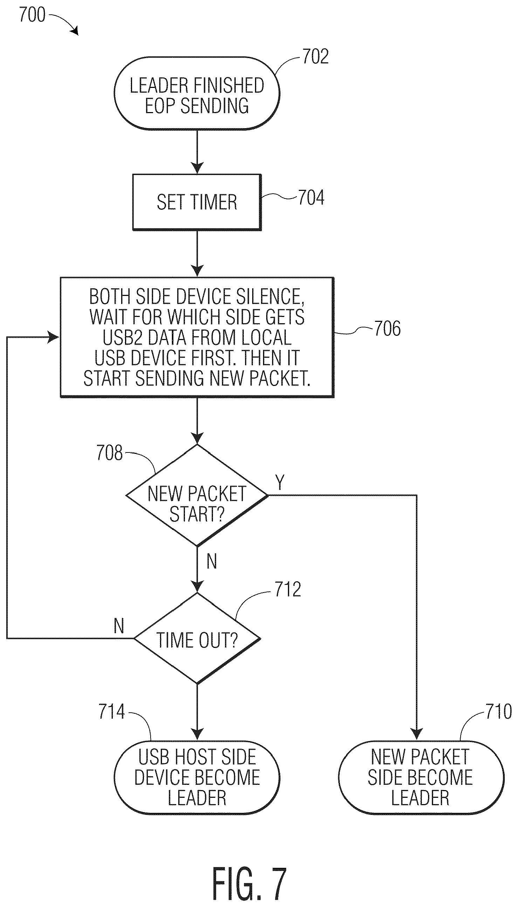

In view of the above discussion regarding the first, second, and third scenarios, it should be appreciated that USB2 data latency can be achieved if a restriction is placed on upstream length. Also, variable packet length can benefit system efficiency. Given these considerations, operation in accordance with the third scheduling strategy (ultra-low latency priority strategy) can particularly be achieved if the improved half duplex burst modem system 100 is configured to operate in accordance with a leader switching protocol or method as illustrated by a flow chart 700 provided in FIG. 7.

The method represented by the flow chart 700 of FIG. 7 is predicated upon several assumptions. First, assuming that the improved half duplex burst modem system 100 is a USB2 system, one can further assume that the improve burst modem system does not decode USB2 data, but still can recognize the USB2 end of packet (EOP) of each USB2 packet. Further, according to the USB2 standard, inter-packet delays are measured from the end of the EOP to the start of the next packet. Within one transaction, the maximum inter-packet delay is specified to be within a certain time range-that is, after an EOP, another packet will be started within a specified time range. Between different transactions, the maximum inter-packet delay is not specified by the USB2 standard, but a new transaction always starts from host side.

Given these assumptions, it can be seen from FIG. 7 that the method represented by the flow chart 700 begins at a step 702, at which the leader finished the EOP sending. Upon this occurring, then at a step 704 a timer is set. Next, at a step 706, both sides or side devices (e.g., both the transmitter portion 702 and the receiver portion 704) are silenced, and both sides/side devices wait for which side/side device gets USB2 data from a local USB (universal serial bus) device first. Upon one of the sides/side devices (e.g., either the transmitter portion 702 or the receiver portion 704, with each including a transceiver capable of transmitting information) receiving USB2 data from a local USB device, then that one of the sides/side devices starts sending a first new packet. The particular one of the sides/side devices that starts sending a new packet can be considered the initial leader of the improved half duplex burst modem system 100.

Next, at a step 708, after the first new packet has been sent (per the step 706), it is determined whether there is a new packet to be sent (new packet start). If there is a new packet to be sent, then at a step 710 the new packet side becomes the leader. In particular, if there is a new packet to be sent that is received at the other one of the sides (or side devices) that is other than the initial leader, then that other one of the sides at which the new packet is received becomes the new leader. Alternatively, if at the step 708 it is determined that no new packet has been sent, then the method advances to a step 712, at which it is determined whether a time out has occurred (or a time period has expired). If so, then the USB host side device becomes the leader as indicated by a step 714. If not, the method returns to and repeats the step 706.

Further, in at least some embodiments or implementations, when USB2 operation is started, the system heartbeat can be aligned to the USB2 start of frame (SOF). In this case, the improved half duplex burst modem system 100 will give highest priority to USB2 data. When no USB data is present, the improved half duplex burst modem system 100 can handle a circumstance in which there is no USB data by operating in accordance with either the first strategy (power consumption priority strategy) or the second strategy (latency priority strategy). Therefore, the improved half duplex burst modem system 100 still can be in an idle state when it has no data to send.

It should be appreciated that one or more embodiments described above or otherwise encompassed herein can be employed in a variety of contexts, environments, or systems (e.g., larger systems). For example, improved half duplex burst modem systems such as the improved half duplex burst modem system 100 can be employed as a wireless interface to replace connector(s), or to allow data transfer through rotating joints of robotic devices. Also, improved half duplex burst modem systems such as the improved half duplex burst modem system 100 can be employed to enable switching of hardware in industrial systems with high reliability of data connections, and also can be employed in many applications in which it is desirable to have medium bandwidth, low power consumption, robust connection of data, and secure connectivity, for example with the addition of AES-128 (Advanced Encryption Standard-128) or higher encryption of the data.

One or more of the embodiments encompassed herein can be advantageous in any of a variety of respects. For example, at least some embodiments encompassed herein relate to improved half duplex burst modem systems that are configured to receive and aggregate data from multiple data sources. In at least some such embodiments, the improved half duplex burst modem systems are configured to pack multiple source data into a single data package having a link layer segment structure (for example, having the format { portID + certain length data } { portID + certain length data } .....)-this is in contrast to conventional systems in which a given packet contains data from only a single source. Additionally, in at least some embodiments encompassed herein, improved half duplex burst modem systems that utilize a segment structure such as the aforementioned segment structure are able to support leader role switching (again, for example, FIG. 7 shows an example method of how to switch the role), which in turn makes it possible to achieve ultra-low latency.

Also, in at least some embodiments or implementations encompassed herein, when latency requirement is not very tight, no leader role switching is needed. For example, in some such embodiments or implementations encompassed herein, the use of (and setting of, or not setting of) a "more frame flag" can allow for the saving of power, which allows improved half duplex burst modem system to behave in an idle manner when there is no data to send. Also, in at least some embodiments or implementations encompassed herein, an improved half duplex burst modem system can employ "virtual slots" for buffer control, and to maintain latency to meet desired operational goals.

While the principles of the invention have been described above in connection with specific apparatus, it is to be clearly understood that this description is made only by way of example and not as a limitation on the scope of the invention. It is specifically intended that the present invention not be limited to the embodiments and illustrations contained herein, but include modified forms of those embodiments including portions of the embodiments and combinations of elements of different embodiments as come within the scope of the following claims.

**Claims**

1.   A half-duplex communication system comprising:

a first communication portion configured to operate at a first time as a first transmitter portion, and to receive a plurality of first data stream signals provided by a plurality of first ports,
wherein the first communication portion includes each of a first data aggregation block, a first framing block, and a first modem device,
wherein the first data aggregation block is configured to aggregate the first data stream signals into a first combination data stream signal, wherein the first framing block is configured to package the first combination data stream signal into a first packaged data stream signal having a plurality of first frames, and wherein the first modem device is configured to communicate a first output signal based upon the first packaged data stream signal; and
a second communication portion configured to operate at the first time as a first receiver portion, and configured to send a plurality of second data stream signals to be received by a plurality of second ports,
wherein the second communication portion includes each of a first data deaggregation block, a first deframing block, and a second modem device,
wherein the second modem device is configured to receive the first output signal and to provide a second packaged data stream signal based upon the output signal, wherein the first deframing block is configured to unpackage the second packaged data stream signal into a second combination data stream signal, and wherein the first data deaggregation block is configured to generate a plurality of second data stream signals based upon the second combination data stream signal.

2.   The half-duplex communication system of claim 1, wherein the first communication portion is configured to operate during at second time as a second receiver portion and the second communication is configured to operate at the second time as a second transmitter portion.

3.   The half-duplex communication system of claim 1 or 2, wherein the first modem device and second modem device are coupled by way of at least one wireless connection.

4.   The half-duplex communication system of claim 3, wherein the first modem device or the first communication portion includes a first antenna, wherein the second modem device or the second communication portion includes a second antenna, and wherein the first communication signals and second communication signals are communicated wirelessly between the first antenna and the second antenna.

5.   The half-duplex communication system of any of the preceding claims, wherein the first modem device and second modem device are coupled by way of at least one wired connection.

6.   The half-duplex communication system of any of the preceding claims, wherein the first communication portion includes at least one first processing device that is configured to provide the aggregation block by performing first operations in accordance with an application layer and second operations in accordance a link layer, and that is additionally configured to provide the framing block by performing second operations in accordance with a physical layer.

7.   The half-duplex communication system of claim 6, wherein the first operations performed by the at least one first processing device include scheduler polling operations.

8.   The half-duplex communication system of claim 6 or 7, wherein the second operations in accordance with the physical layer includes assembling a packet including at least some data received by each of the plurality of first data stream signals provided by each of the plurality of first ports.

9.  The half-duplex communication system of any of the preceding claims, if also dependent on claim 2, wherein the first communication portion is a first transceiver portion in which the first modem device can both transmit first communication signals including the first output signal and also receive second communication signals, and wherein the second communication portion is a second transceiver portion in which the second modem device can both receive the first communication signals including the first output signal and also transmit the second communication signals.

10. The half-duplex communication system of any of the preceding claims, if also dependent on claim 2, wherein the first communication portion and the second communication portion are configured to operate so that, during a first time slot beginning at the first time, a first communication of a first frame occurs between the first communication portion and second communication portion, wherein the first communication of the first frame includes both a first transmission of the first output signal as a first downstream packet from the first communication portion to the second communication portion and also a second transmission of a second output signal as a first upstream packet from the second communication portion to the first communication portion, the second transmission occurring substantially immediately after the first transmission.

11. The half-duplex communication system of claim 10, wherein each of the first downstream packet and the upstream packet includes a respective payload, a respective header slotted prior to the respective payload, a respective SYNC field slotted prior to the respective header, and a respective preamble field slotted prior to the respective SYNC field.

12. The half-duplex communication system of claim 10 or 11, wherein the first communication portion is configured to send a plurality of heartbeat signals to the second communication portion on a periodic basis, wherein the plurality of heartbeat signals includes a first one of the heartbeat signals and a plurality of additional ones of the heartbeat signals, and wherein the first communication of the first frame occurs substantially immediately after a first completing of a first one of the heartbeat signals.

13. The half-duplex communication system of claim 12, wherein the first communication portion and second communication portion are further configured to operate so that, during additional time slots, respectively, respective additional communications of respective additional frames occur between the first communication portion and the second communication portion, wherein each of the additional communications of each of the additional frames includes a respective first additional transmission of a respective additional downstream packet and a respective second additional transmission of a respective additional upstream packet, the respective second additional transmission occurring substantially immediately after the respective first additional transmission.

14. The half-duplex communication of claim 13,

    wherein the first communication portion and the second communication portion are further configured to operate so that each of the additional communications of the respective additional frames occurs substantially immediately after (a) a respective additional one of the heartbeat signals, (b) the first frame if the first frame is has a first flag set status, or (c) a respective different one of the additional frames if the respective different one of the additional frames has the first flag set status, and
    wherein additionally the first communication portion and the second communication portion operate in accordance with a virtual slot at an additional time.

15. A method of operating a half-duplex communication system, the method comprising:

    providing a first communication portion with a first transceiver portion and a second communication portion with a second transceiver portions;
    generating a first heartbeat signal at the first communication portion during a first time slot;
    if a first determination is made during the first time slot that there is first information appropriate to be communicated between the first communication portion and the second communication portion, then communicating a first frame including a first downstream packet and a first upstream packet between the first transceiver portion and the second transceiver portion during a second time slot following the first heartbeat signal, wherein the first downstream packet is communicated from the first transceiver portion to the second transceiver portion and the first upstream packet is communicated from the second transceiver portion to the first transceiver portion, and wherein the first frame is of a first type;
    if a second determination is made during the second time slot that there is second information appropriate to be communicated between the first communication portion and the second communication portion, communicating a second frame including a second downstream packet and a second upstream packet between the first transceiver portion and the second transceiver portion during a third time slot following the second time slot, wherein the second downstream packet is communicated from the first transceiver portion to the second transceiver portion and the first upstream packet is communicated from the second transceiver portion to the first transceiver portion, wherein the second frame is of a second type;

refraining from communicating an additional frame between a first conclusion of the third time slot and a fourth time slot at which a second heartbeat signal is generated if both of the first determination and the second determination are made; and

generating the second heartbeat signal at the fourth time slot, wherein the first and second heartbeat signals are two of a plurality of heartbeat signals that are generated periodically.

FIG. 1

FIG. 2

FIG. 3

400

402

402

402

404

404

## FIG. 4

504

210

500

502

212

506

508

## FIG. 5

602,606

612,616

614,618

600

602,608

620,618

602,610

604

604

622

624

## FIG. 6

700

702

LEADER FINISHED
EOP SENDING

SET TIMER 704

BOTH SIDE DEVICE SILENCE,
WAIT FOR WHICH SIDE GETS
USB2 DATA FROM LOCAL
USB DEVICE FIRST. THEN IT
START SENDING NEW PACKET. 706

708

NEW PACKET
START? — Y

N

712

N — TIME OUT?

714

USB HOST SIDE
DEVICE BECOME
LEADER

710

NEW PACKET
SIDE BECOME
LEADER

FIG. 7

EP 4 738 757 A1

## EUROPEAN SEARCH REPORT

Europäisches
Patentamt
European
Patent Office
Office européen
des brevets

**Application Number**

EP 25 20 9848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 204 076 B2 (GENESIS MICROCHIP INC [US]; KOBAYASHI OSAMU [US]) 19 June 2012 (2012-06-19) | 1-11,15 | INV. H04L5/16 H04L47/28 |
| Y | * column 9, line 10 - line 20 * * column 11, line 42 - column 12, line 9 * * column 12, line 39 - line 53 * * column 13, line 24 - column 14, line 51 * * figures 1, 2, 3, 5, 12 * ----- | 12-14 | |
| Y | US 10 938 877 B2 (XAPTUM INC [US]) 2 March 2021 (2021-03-02) | 12-14 | |
| A | * column 7, line 60 - column 8, line 53 * * column 15, line 48 - line 59 * * column 17, line 40 - line 58 * ----- | 1-11,15 | |
| A | US 9 843 436 B2 (LOW CHIA HOW [MY]; INTEL CORP [US]; PHUN SU SIN FLORENCE [MY]) 12 December 2017 (2017-12-12) * column 7, line 35 - line 44 * * column 8, line 36 - line 38 * * column 5, line 14 - column 7, line 13 * * column 12, line 1 - line 22 * * column 13, line 3 - line 11 * * column 16, line 18 - line 23 * * column 19, line 19 - line 28 * * claims 1-4; figures 1-5, 11-13 * ----- | 1-15 | TECHNICAL FIELDS SEARCHED (IPC) H04L |

The present search report has been drawn up for all claims

| Place of search | Date of completion of the search | Examiner |
|---|---|---|
| The Hague | 13 March 2026 | Amadei, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 9848

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2026

| Patent document cited in search report | | Publication date | Patent family member(s) | | Publication date |
|---|---|---|---|---|---|
| US 8204076 | B2 | 19-06-2012 | CN | 101295493 A | 29-10-2008 |
| | | | EP | 1986183 A1 | 29-10-2008 |
| | | | JP | 5269469 B2 | 21-08-2013 |
| | | | JP | 2008278488 A | 13-11-2008 |
| | | | KR | 20080096401 A | 30-10-2008 |
| | | | SG | 147380 A1 | 28-11-2008 |
| | | | TW | 200907920 A | 16-02-2009 |
| | | | US | 2007201492 A1 | 30-08-2007 |
| | | | US | 2012229486 A1 | 13-09-2012 |
| US 10938877 | B2 | 02-03-2021 | NONE | | |
| US 9843436 | B2 | 12-12-2017 | CN | 107710180 A | 16-02-2018 |
| | | | DE | 112016002909 T5 | 08-03-2018 |
| | | | US | 2016380747 A1 | 29-12-2016 |
| | | | WO | 2017003610 A1 | 05-01-2017 |

EPO FORM P0459

For more details about this annex : see Official Journal of the European Patent Office, No. 12/82